# EUROPEAN PATENT APPLICATION

(11) **EP 2 620 592 A1**
(43) Date of publication of application: **31.07.2013**
(21) Application number: 12152692.5
(22) Date of filing: 26.01.2012
(51) Int. Cl.: F01D 5/18

(54) **Airfoil for a gas turbine engine having a tubular impingement element**

(71) Applicant: Alstom Technology Ltd, 5400 Baden (CH)
(72) Inventor: Kreiselmaier, Erich, 5608 Stetten (CH); Anguisola McFeat, Jose, 79787 Lauchringen (DE); Sommer, Christian Walter, 5415 Nussbaumen (CH)

(57) **Abstract**

For the sake of improving performance of a gas turbine engine (310), the present disclosure teaches an airfoil (400) for a gas turbine engine, comprising an airfoil body (410) having a leading edge (411), a trailing edge (412) and a cavity (420), and a tubular impingement element (430) having a plurality of impingement openings (433), wherein the impingement element is mounted in the cavity, the leading edge is substantially straight as viewed orthogonally onto a longitudinal axis of the leading edge from at least one direction, a trailing perimeter of the cavity is substantially straight as viewed orthogonally onto a longitudinal axis of the trailing perimeter from at least one direction, and the trailing edge is curved relative to a longitudinal axis of the trailing edge.

## Description

### FIELD OF THE DISCLOSURE

The present disclosure relates to an airfoil, in particular for a gas turbine. The present disclosure also relates to a method of modifying a gas turbine.

### DESCRIPTION OF THE RELATED ART

Gas turbines are used in a variety of applications. For example, gas turbines are used for producing an output of mechanical power, e.g. for driving electrical generators in power plants. Gas turbines are also used for vehicle propulsion.

A typical gas turbine comprises a compression stage with a number of rotor and stator blades, a combustion stage and an expansion stage with a number of rotor and stator blades. The compression means inflowing air in the compression stage are connected by means of a driveshaft to turbine blades in the expansion stage.

The compressed air then enters the combustion stage, where it is heated by combustion of fuel. This hot, compressed air, often termed "motive gas," then enters the expansion stage, where the hot, compressed air expands and imparts energy onto the turbine blades of the expansion stage. This not only drives the driveshaft for outputting power, but also provides the energy necessary to rotate the rotor blades in the compression stage.

After imparting energy onto the turbine blades in the expansion stage, the hot air, typically denoted as a flue gas due to the presence of combustion byproducts resulting from combustion of the fuel, enters a flue gas exhaust stage where heat may be extracted from the flue gas and/or the flue gas may undergo scrubbing to reduce the number of contaminant particles in the flue gas to prevent them from being released into the atmosphere.

The respective paths along which the molecules of the motive gas flow through a gas turbine are influenced by numerous factors. Such factors include the shape of the turbine blades, the rotational speed of the turbine blades, the general shape of the passage through which the motive gas flows, etc. For example, it is typical for the diameter of the compression stage to decrease with proximity to the combustion stage and for the diameter of the expansion stage to increase with distance from the combustion stage.

Accordingly, the path that a respective molecule of the motive gas will take through the gas turbine is typically not linear, but may include radial and circumferential components with respect to an axis of rotation of the gas turbine. Due to the general symmetry of a gas turbine, the streamline of the motive gas at any particular point in a gas turbine can be given to sufficient accuracy by a function of the radius and the axial position. Nonetheless, the streamlines of the motive gas depend strongly on the geometry of the gas turbine and cannot be generalized. Instead, the streamlines must be estimated by numerical simulation or be empirically determined.

For the sake of improving the efficiency with which energy can be extracted from the motive gas by the turbine blades, it is known to design the turbine blades in the form of an airfoil.

It is an object of the present disclosure to improve upon this prior art.

### BRIEF SUMMARY OF THE DISCLOSURE

Generally speaking, the present disclosure provides an airfoil for a gas turbine, the airfoil exhibiting improved performance in terms of thermal robustness and aerodynamics without unduly complicating manufacture.

In accordance with a teaching of the present disclosure, this can be achieved, *inter alia*, by providing an airfoil having a leading portion without significant curvature and a trailing portion having a trailing edge designed to be orthogonal to the local streamlines of the motive gas. The leading portion is provided with impingement cooling. Specifically, a leading portion of the airfoil comprises a cavity and a tubular impingement element located in the cavity. A trailing wall of the cavity, i.e. a wall of the cavity closest to the trailing edge, is without significant curvature. The trailing wall of the cavity may be essentially parallel to the leading edge. The impingement element is formed of a sheet-like material comprising a plurality of impingement openings. A cooling fluid forced into the impingement element exits the impingement element through the impingement openings, thus producing jets of cooling fluid against an inner wall of the cavity. The airfoil comprises a plurality of openings between the cavity and the ambient atmosphere, e.g. through the trailing edge, through which openings the cooling fluid exits from the cavity into the ambient atmosphere. Since the leading portion is without significant curvature, the cavity and the impingement element have a form that allows easy manufacture and easy assembly of the impingement element into the cavity. Nonetheless, the trailing portion has an aerodynamically beneficial form.

In accordance with a first aspect, the present disclosure teaches an airfoil for a gas turbine. The airfoil may be designed for use as a vane of a stator referring to compression stage and expansion stage of the gas turbine or maybe designed for use as a blade of a rotor referring to compression stage and expansion stage of the gas turbine.

The airfoil may have six general sides. Specifically, the airfoil may comprise a leading edge, a trailing edge, a root, a tip, a pressure surface and a suction surface.

The leading edge can be understood as a forward-most portion / side of the airfoil relative to the local streamlines of the motive gas. In other words, the local streamlines of the motive gas pass the leading edge of the airfoil first when flowing past the airfoil. The leading edge may likewise be understood as a region where a major convex surface of the airfoil (often designated as a "suction surface") meets a major concave surface of the airfoil (often designated as a "pressure surface") in a forward region of the airfoil relative to the flow of motive gas. Similarly, the trailing edge can be understood as the rearmost portion of the airfoil relative to the local streamlines of the motive gas. In other words, the local streamlines of the motive gas pass the trailing edge of the airfoil last when flowing past the airfoil. As such, the trailing edge is at an end of the airfoil generally opposite or most distal from the leading edge. The trailing edge may likewise be understood as a region where a major convex surface of the airfoil (*i.e*. the "suction surface") meets a major concave surface of the airfoil (*i.e*. the "pressure surface") in a rearward region of the airfoil relative to the flow of motive gas.

The root can be understood as a portion / side of the airfoil that provides primary support / affixation of the airfoil, *e.g*. to a main component of the gas turbine. The root may be in direct contact with a driveshaft or stator housing of the gas turbine. Similarly, the root may be in direct contact with a mounting element that is releasably mountable on the driveshaft or stator housing. The tip may be understood as a portion / side of the airfoil that, *e.g*. where the airfoil is designed for use as a stator vane, is most distant from the stator, *i.e*. is closest to the axis of rotation of a corresponding rotor. The tip may likewise be understood as a portion / side of the airfoil that, *e.g*. where the airfoil is designed for use as a rotor blade, is most distant from the axis of rotation of the rotor, *i.e*. is closest to the stator. The tip may be understood as an end / a side of the airfoil that is opposite or most distal from the root. Similarly, the root may be understood as a side of the airfoil that is opposite or most distal from the tip.

The pressure surface can be understood as a (major) side of the airfoil having a concave shape or an at least generally concave shape. In other words, a central region of the pressure surface may curve inwardly, toward a core of the airfoil. The concavity of the pressure surface may extend in a single arc from the leading edge to the trailing edge. The suction surface can be understood as a (major) side of the airfoil having a convex shape or at least generally convex shape. In other words, a central region of the suction surface may bulge outward, away from the core of the airfoil. The convexity of the suction surface may extend in a single arc from the leading edge to the trailing edge. The pressure and/or suction surface may span from the root to the tip. Similarly, the pressure and/or suction surface may span from the leading edge to the trailing edge. The suction surface may be a side of the airfoil that is opposite the pressure surface, and vice-versa. The generally convex shape of the suction surface in relation to the generally concave shape of the pressure surface causes fluid passing the airfoil along the suction surface to travel more quickly than fluid passing the airfoil along the pressure surface, thus reducing the pressure of the fluid along the suction surface relative to the pressure of the fluid along the pressure surface, which generates lift along the airfoil in the direction of the suction surface.

The airfoil may comprise an airfoil body. The airfoil body may constitute one or more or all of the leading edge, the trailing edge, the tip, the root, the pressure surface and the suction surface of the airfoil. Similarly, an outer surface of the airfoil body may form an outer surface of the airfoil, *e.g*. the pressure surface and/or the suction surface of the airfoil. The airfoil body may be formed of a metallic alloy, *e.g*. of a metallic alloy capable of withstanding temperatures of the hot gas.. The airfoil body may be formed by casting. In other words, the airfoil body may be formed of a cast material.

The airfoil body may comprise a cavity. The cavity may be formed in one of the tip and the root of the airfoil. Similarly, the cavity may open (solely) to one or both of the tip and the root of the airfoil. As such, the cavity may form an opening through the airfoil body from the root to the tip of the airfoil body. Similarly, the cavity may form an opening into / pocket in the airfoil body from the root / tip of the airfoil body. The cavity may have an elongated cross-section, e.g. a generally oval cross-section, in a plane orthogonal to the pressure surface. The cavity may have a roughly cylindrical and/or tapered shape.

The airfoil may comprise an impingement element. The impingement element may be located / mounted in the cavity. The impingement element may be formed such that a fluid flowing into the impingement element under pressure exits the impingement element in the form of one or more jets that impinge upon a wall of the cavity. The impingement element may be tubular. The impingement element may have a plurality of impingement openings, *e.g*. openings through which a pressurized fluid may exit the impingement element, *e.g*. for the sake of providing impingement cooling of the airfoil body via a wall of the cavity.

One or more or all of the impingement openings may belong to the group consisting of rectangular, oval and circular openings. Two or more or all of the impingement openings may be of (substantially) equal area and/or shape.. The impingement openings may be formed by drilling or stamping the openings through a wall of the impingement element.

The impingement openings may be located at positions of the impingement element that, when the impingement element is located in the airfoil body, are most proximate to portions of the airfoil body that are to be cooled and/or that require cooling.

The leading edge of the airfoil may be straight or substantially straight. The expression "substantially straight" may be understood in the sense that an angle between any two tangents to a line representing the leading edge does not exceed eight degrees, does not exceed five degrees or does not exceed two degrees. The expression "substantially straight" may also be understood in the sense that no four distinct points exist on the line representing the leading edge, a first line through two of said four points being skewed relative to a second line through the remaining two of said four points by more than eight degrees, by more than five degrees or by more than two degrees.

As touched upon *supra*, the leading edge may be understood as a (leading edge) region where a major convex surface of the airfoil (*e.g*. the suction surface) meets a major concave surface of the airfoil (*e.g*. the pressure surface) in a forward portion of the airfoil relative to the flow of motive gas. The line representing the leading edge may be a line connecting midpoints of the (leading edge) region, the individual midpoints being ascertained in a direction orthogonal to a longitudinal axis of the region. Similarly, the line representing the leading edge may be a line from a tip-ward region of the airfoil to a root-ward region of the airfoil through the points where the motive gas first impinges on the airfoil as the motive gas flows past the airfoil. Furthermore, the line representing the leading edge may be a forward-most profile of the airfoil when viewed in a circumferential direction of a stator or rotor of a gas turbine employing the airfoil. Similarly, the line representing the leading edge may be a line through the points defining a forward-most profile of the airfoil when viewed in a circumferential direction of a stator or rotor of a gas turbine employing the airfoil.

Just as an egg may appear round from one perspective and oval from another perspective, a determination as to whether the leading edge of the airfoil is straight or substantially straight may depend on the viewing perspective. The straightness of the leading edge of the airfoil may be assessed in three-dimensional space, *i.e*. regardless of the viewing perspective. Similarly, assessment of the straightness of the leading edge of the airfoil may be limited to measurement from one direction. For example, the leading edge may be substantially straight as viewed orthogonally onto a longitudinal axis of the leading edge from any one (or more) direction(s). In other words, the leading edge may appear substantially straight when viewed from a point on a line that is orthogonal to a longitudinal axis of the leading edge. In the context of the present disclosure, the term "longitudinal axis of the leading edge" may be understood as a straight line connecting a (most) tip-ward point on a line representing the leading edge with a (most) root-ward point on a line representing the leading edge. Similarly, assessment of the straightness of the leading edge of the airfoil may be limited to measurement solely in a meridional direction, i.e. in a direction of the local streamlines of the motive gas or in a general direction of flow of the motive gas. Furthermore, assessment of the straightness of the leading edge of the airfoil may be limited to measurement solely in a direction roughly perpendicular to the meridional direction and a longitudinal direction of the leading edge. In other words, the straightness of the leading edge may be assessed in three-dimensional space, in a longitudinal direction or a circumferential direction of a stator or rotor of a gas turbine employing the airfoil.

A trailing perimeter of the cavity may be substantially straight. The expression "substantially straight" may be understood in the sense that an angle between any two tangents to a line representing the trailing perimeter does not exceed eight degrees, does not exceed five degrees or does not exceed two degrees. The expression "substantially straight" may also be understood in the sense that no four distinct points exist on the line representing the trailing perimeter, a first line through two of said four points being skewed relative to a second line through the remaining two of said four points by more than eight degrees, by more than five degrees or by more than two degrees.

The trailing perimeter of the cavity may be understood as a perimeter defined by a wall of the cavity proximal to the trailing edge of the airfoil. The trailing perimeter may be a perimeter from a tip-ward region of the airfoil to a root-ward region of the airfoil, *i.e*. a perimeter in a radial direction of a gas turbine employing the airfoil. Accordingly, the line representing the trailing perimeter may be a line from a tip-ward region of the airfoil to a root-ward region of the airfoil through the points on an inner wall of the cavity least distant from the trailing edge of the airfoil. Similarly, the line representing the trailing perimeter may be a line from a tip-ward region of the airfoil to a root-ward region of the airfoil through the points on an inner wall of the cavity most distant from the leading edge of the airfoil. Likewise, the line representing the trailing perimeter may be a rear-most profile of the cavity when viewed in a circumferential direction of a stator or rotor of a gas turbine employing the airfoil. Similarly, the line representing the trailing perimeter may be a line through the points defining a forward-most profile of the airfoil when viewed in a circumferential direction of a stator or rotor of a gas turbine employing the airfoil.

The straightness of the trailing perimeter may be assessed in three-dimensional space, *i.e*. regardless of the viewing perspective. Similarly, assessment of the straightness of the trailing perimeter may be limited to measurement from one direction. For example, the trailing perimeter may be substantially straight as viewed orthogonally onto a longitudinal axis of the trailing perimeter from any one (or more) direction(s). *Inter alia*, the trailing perimeter may be substantially straight as viewed from along a line though the trailing perimeter (or through a line representative of the trailing perimeter) and orthogonal to a pressure surface of the airfoil (body) at a radial position of narrowest throat. The term "throat" may be understood as a circumferential distance between two airfoils of a gas turbine, a single airfoil having an associated throat on account of its design for a specific turbine. As another example, the trailing perimeter may appear substantially straight when viewed from a point on a line that is orthogonal to a longitudinal axis of the trailing perimeter. In the context of the present disclosure, the term "longitudinal axis of the trailing perimeter" may be understood as a straight line connecting a (most) tip-ward point on a line representing the trailing perimeter with a (most) root-ward point on a line representing the trailing perimeter. Similarly, assessment of the straightness of the trailing perimeter may be limited to measurement solely in a meridional direction, *i.e*. in a direction of the local streamlines of the motive gas or in a general direction of flow of the motive gas. Furthermore, assessment of the straightness of the trailing perimeter may be limited to measurement solely in a direction roughly perpendicular to the meridional direction and a longitudinal direction of the trailing perimeter. In other words, the straightness of the trailing perimeter may be assessed in three-dimensional space, in a longitudinal direction or a circumferential direction of a stator or rotor of a gas turbine employing the airfoil.

The trailing perimeter may be (substantially) parallel to the leading edge. In other words, a line representative of the trailing perimeter may be (substantially) parallel to a line representative of the leading edge. The distance between leading edge and trailing perimeter may also decrease from root to tip.

The trailing edge of the airfoil may be curved, e.g. relative to a longitudinal axis of the trailing edge. The expression "curved" may be understood in the sense that an angle between any two tangents to a line representing the trailing edge exceeds eight degrees, exceeds five degrees or exceeds two degrees. The expression "curved" may also be understood in the sense that four distinct points exist on the line representing the trailing edge, a first line through two of said four points being skewed relative to a second line through the remaining two of said four points by more than eight degrees, by more than five degrees or by more than two degrees.

As touched upon *supra*, the trailing edge may be understood as a (trailing edge) region where a major convex surface of the airfoil (*e.g*. the suction surface) meets a major concave surface of the airfoil (*e.g*. the pressure surface) in a rearward portion of the airfoil relative to the flow of motive gas. The line representing the trailing edge may be a line connecting midpoints of the (trailing edge) region, the individual midpoints being ascertained in a direction orthogonal to a longitudinal axis of the region.

Similarly, the line representing the trailing edge may be a line from a tip-ward region of the airfoil to a root-ward region of the airfoil through the points where the motive gas last passes the airfoil as the motive gas flows past the airfoil. Furthermore, the line representing the trailing edge may be a most rearward profile of the airfoil when viewed in a circumferential direction of a stator or rotor of a gas turbine employing the airfoil. Similarly, the line representing the trailing edge may be a line through the points defining a most rearward profile of the airfoil when viewed in a circumferential direction of a stator or rotor of a gas turbine employing the airfoil.

A determination as to whether the trailing edge of the airfoil is curved may depend on the viewing perspective. The curvedness of the trailing edge of the airfoil may be assessed in three-dimensional space, i.e. regardless of the viewing perspective. Similarly, assessment of the curvedness of the trailing edge of the airfoil may be limited to measurement from one direction.

For example, the trailing edge may be curved as viewed orthogonally onto a longitudinal axis of the trailing edge from any one (or more) direction(s). In other words, the trailing edge may appear curved when viewed from a point on a line that is orthogonal to a longitudinal axis of the trailing edge. In the context of the present disclosure, the term "longitudinal axis of the trailing edge" may be understood as a straight line connecting a (most) tip-ward point on a line representing the trailing edge with a (most) root-ward point on a line representing the trailing edge. Similarly, assessment of the curvedness of the trailing edge of the airfoil may be limited to measurement solely in a meridional direction, *i.e*. in a direction of the local streamlines of the motive gas or in a general direction of flow of the motive gas.

Furthermore, assessment of the curvedness of the trailing edge of the airfoil may be limited to measurement solely in a direction roughly perpendicular to the meridional direction and a longitudinal axis of the trailing edge. For example, the trailing edge may be curved in a direction roughly orthogonal to the suction surface at the trailing edge. In other words, the curvedness of the trailing edge may be assessed in three-dimensional space, in a longitudinal direction or a circumferential direction of a stator or rotor of a gas turbine employing the airfoil.

By limiting the possible geometries of the leading edge, the trailing perimeter and/or the trailing edge as described above, the airfoil can be seen as having a leading portion having a simple geometry and a trailing portion having a complex geometry. This simplifies both the design and manufacture of the airfoil, thus allowing for design and manufacture of higher performance airfoils, *e.g*. in terms of thermal robustness and aerodynamics.

The airfoil (body) may comprise a plurality of fluid passages extending through the airfoil body from the cavity to an outer surface of the airfoil body.

One or more or all of the fluid passages may be of (substantially) constant diameter. Two or more or all of the fluid passages may be of (substantially) equal diameter. Similarly, the diameter of the largest of the fluid passages may be larger than the diameter of the smallest of the fluid passages. One or more or all of the fluid passages may have a diameter of 5 mm or less, 3 mm or less, or even 1 mm or less. The fluid passages may be formed by drilling through the airfoil body or during a casting of the airfoil body.

The airfoil body may comprise a leading edge portion proximate to the leading edge. The airfoil body may comprise a trailing edge portion proximate to the trailing edge.

The cavity may be located in the leading edge portion. In other words, (the entirety of) the cavity may be located in a portion of the airfoil body that is proximate to the leading edge and spaced / distanced from the trailing edge. For example, the cavity may be spaced from the trailing edge by at least 20%, 30%, 40% or 50% of the distance from the leading edge to the trailing edge, *e.g*. as measured along a midline of a cross-section of the airfoil body in a plane orthogonal to the pressure surface. Similarly, the cavity may be spaced from the leading edge by less than 10%, less than 5% or less than 2% of the distance from the leading edge to the trailing edge. The cavity may extend over 40%, 50%, 60% or 70% of the distance from the leading edge to the trailing edge.

One or more or all of the fluid passages may be located in the trailing edge portion. One or more or all of the fluid passages may extend from the cavity to the trailing edge. The cavity and the fluid passages may be the sole cavities / passages in the airfoil body.

The impingement element may be sealingly mounted in the cavity, *e.g*. such that fluid communication between an inner volume of the tubular impingement element and a remaining volume of the cavity (*i.e*. a volume of the cavity not filled by the impingement element and its inner volume) is (substantially) limited to fluid communication through the plurality of impingement openings. For example, the impingement element may be brazed or welded to the airfoil body such that a gas-tight seal is formed between the impingement element and the airfoil body. Similarly, the impingement element may be press-fitted into and/or against the airfoil body such that a gas-tight seal is formed between the impingement element and the airfoil body.

The impingement element may be formed of a sheet-like material, *e.g*. a sheet-like material shaped into the form of a tube. One end of the tube may be (sealingly) closed, *e.g*. in a (substantially). The impingement element / tube may have an elongated cross-section, e.g. a generally oval cross-section, in a plane orthogonal to the pressure surface. The impingement element may be formed of a metallic alloy.

A wall of the cavity may comprise a plurality of protuberances, *e.g*. (roughly hemispherical) bumps. Such protuberances may be formed during casting of the airfoil body or may be formed, *e.g*. deposited, onto the cavity wall after casting of the airfoil body. Two or more or all of the protuberances may be of (substantially) equal shape and/or size. Similarly, the diameter of the largest of the protuberances may be less than 50 percent larger than the diameter of the smallest of the protuberances. One or more or all of the protuberances may have a diameter of less than 8 mm, less than 5 mm or less than 3 mm.

An outer wall of the impingement element may abut the plurality of protuberances. In other words, the impingement element may be formed such that an outer wall of the impingement element abuts the plurality of protuberances. By spacing the impingement element from the wall of the cavity, the protuberances create an impingement gap between the impingement element and (the wall of) the cavity. The impingement gap may be substantially constant. In other words, the spacing between the impingement element and the wall of the cavity may be substantially constant at and between the protuberances.

Similarly, an outer wall of the impingement element may comprise a plurality of protuberances, *e.g*. as described above. The plurality of protuberances may abut the wall of the cavity. As such, the protuberances may again create an impingement gap between the impingement element and (the wall of) the cavity. Again, the impingement gap may be substantially constant.

Notwithstanding an impingement gap between the impingement element and the cavity, the impingement element may (be formed so as to) fit matingly into the cavity. In other words, an outer wall of the impingement element may have a shape that matches the shape of the cavity. Both the impingement element and the cavity may be shaped such that the impingement element may be inserted into the cavity, *e.g*. such that the impingement element may be moved from a position fully outside of the cavity to a mating position within the cavity. In this respect, the cavity may have a (slightly) tapered form. For example, a cross-section of the cavity in planes parallel to the (major) cavity opening in the airfoil body may (gradually) decrease with increasing distance from the cavity opening. The tapering may form an angle of less than 5 degrees or less than 2 degrees relative to a longitudinal axis of the cavity or relative to an axis of insertion of the impingement element into the cavity.

The impingement element, the impingement openings and/or the cavity may be formed and/or configured such that a flow of gas exiting the impingement element through the impingement openings impinges on a wall of said cavity. In this respect, the impingement element may be configured to receive a compressed (impingement) fluid, *e.g*. from a compressor stage of a gas turbine.

The airfoil (in particular the impingement element, the impingement openings, the cavity and/or the fluid passages) may be configured such that a flow of an impingement fluid through the cavity transports heat away from portions / surfaces of the airfoil that are particularly susceptible to heating from the heat and/or pressure of the motive gas.

As touched upon above, the present disclosure teaches a gas turbine comprising an airfoil, *e.g*. an airfoil as described herein.

The gas turbine may have a generally cylindrical shape. The gas turbine may thus define longitudinal, circumferential and radial directions. The motive gas flows through the gas turbine substantially in the longitudinal direction.

As likewise touched upon above, the design of the gas turbine defines local streamlines along which the motive gas will flow when passing through the gas turbine. *Inter alia*, the local streamlines may be a function of the operating parameters of the gas turbine. The term "local streamlines" may thus be understood as the local streamlines that arise when the gas turbine is operating at nominal power. The streamlines may be assessed by numeric simulation and/or by empirical measurement.

The trailing edge of the airfoil may be shaped such that, for all points along the trailing edge, a local streamline of motive gas through the gas turbine is orthogonal (*e.g*. to within ± 2 degrees or to within ± 5 degrees) to the trailing edge at an intersection of the local streamline and the trailing edge. The trailing edge of the airfoil may be shaped such that, for all points along the trailing edge, a tangent to the trailing edge through the respective point in a longitudinal direction of the trailing edge and/or in a radial direction of the gas turbine is perpendicular (*e.g*. to within ± 2 degrees or to within ± 5 degrees) to the local streamline of motive gas at the respective point. A trailing edge of such design increases the efficiency of the airfoil by reducing diversion of the motive gas in a direction that differs from an intended principal flow direction of the motive gas.

The gas turbine may comprise a compression stage, a combustion stage and an expansion stage. The gas turbine may comprise a rotor that defines one or more rotary turbines. For example, the compression stage may comprise a rotary turbine having a plurality of turbine blades that provide for compression of an inflowing fluid, e.g. air. The expansion stage may likewise comprise a rotary turbine having a plurality of turbine blades. The rotary turbine of the compression stage may be connected to the rotary turbine of the expansion stage, e.g. by a driveshaft, in a manner that allows energy imparted into the rotary turbine of the expansion stage to be transferred to the rotary turbine of the compression stage, for example for driving the rotary turbine of the compression stage to provide for compression of the inflowing fluid via rotation of the rotary turbine of the compression stage. In this respect, the turbine blades of the compression stage and/or the turbine blades of the expansion stage may be directly connected to a driveshaft via which the rotary turbines of the expansion and compression stages are connected.

In the combustion stage, the compressed fluid exiting the compression stage is heated by combustion of a fuel, e.g. in a combustion chamber through which the compressed fluid flows. To this aim, the combustion stage may comprise a plurality of nozzles for mixing the fuel with the compressed fluid, *e.g*. by spraying the fuel into a combustion chamber at high pressure. The combustion of the fuel in the combustion stage may be regulated for the sake of obtaining efficient combustion, *e.g*. by controlling the amount, the pressure, etc. of the fuel mixed with the compressed fluid.

The gas turbine may constitute part of a power generating system that comprises a combustion controller for effecting this controlling as well as one or more sensor devices for sensing operating parameters of the gas turbine, *e.g*. of the fuel, the compressed fluid, the combustion, etc. Such operating parameters may include a temperature, a pressure, etc.

The gas turbine may be designed such that the compressed fluid that has been heated in the compression stage flows into the expansion stage, where it imparts energy into the rotary turbine of the expansion stage as it undergoes expansion, thus causing the rotary turbine of the expansion stage to rotate. This rotation of the rotary turbine of the expansion stage may be harnessed to provide an output of mechanical power, *e.g*. for driving an electrical generator.

As touched upon above, the gas turbine may comprise a rotor having at least one blade, *e.g*. having one or more sets of blades extending radially outwardly from a rotary shaft of the rotor. The blades of each set may be distributed around the rotary shaft in a fan-like fashion. The sets of blades may be interleaved with the sets of vanes provided on the inner circumference of the stator. One or more or all of the blades and/or vanes may be an airfoil as described herein.

The gas turbine may comprise a passage that allows a portion of the fluid compressed in the compression stage to be communicated under pressure into the impingement element of one or more of the airfoils.

While the above disclosure has revolved primarily around an airfoil and a gas turbine comprising an airfoil, the above disclosure is equally applicable, *mutatis mutandis*, to a method of modifying a gas turbine. Accordingly, in accordance with a second aspect, the present disclosure teaches a method of modifying a gas turbine.

The method of modifying a gas turbine may comprise equipping the gas turbine with an airfoil as described herein.

### BRIEF DESCRIPTION OF THE DRAWINGS

The novel features of the invention, as well as the invention itself, both as to its structure and its operation will be best understood from the accompanying figures, taken in conjunction with the accompanying description. The Figures shows:
- Fig. 1: a schematic view of another gas turbine in accordance with the present disclosure;
- Fig. 2: a schematic perspective view of an airfoil in accordance with the present disclosure;
- Fig. 3: a schematic, cross-sectional view of the airfoil of Fig. 2 and
- Fig. 4: another schematic, cross-sectional view of the airfoil of Fig. 2.

### DETAILED DESCRIPTION OF THE DRAWINGS

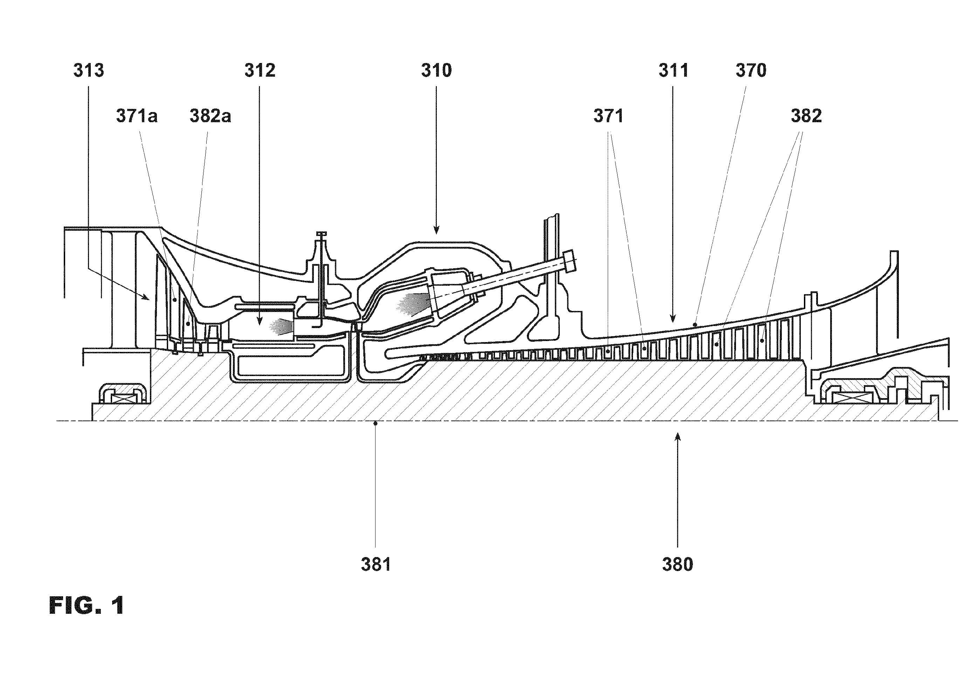

Figure 1 shows a schematic view of a gas turbine 310 in accordance with the present disclosure, *e.g*. as described hereinabove.

In the embodiment illustrated in Fig. 1, gas turbine 310 comprises a compression stage 311, a combustion stage 312 and an expansion stage 313. Gas turbine 310 is furthermore illustrated as comprising a stator 370 having a plurality of vanes 371 and 371 a relating to compression stage and expansion stage and a rotor 380 having a rotational shaft 381 and a plurality of blades 382 and 382a relating to compression stage and expansion stage affixed to rotational shaft 381. Vanes 371, 371 a extend radially inwardly from a housing of stator 370, whereas blades 382, 382a extend radially outwardly from rotational shaft 381. As exemplified in Fig. 1, vanes 371, 371a and blades 382, 382a may be arranged in an interleaved configuration. One or more of vanes 371, 371 a and/or blades 382, 382a may be an airfoil 400 in accordance with the present disclosure, e.g. as described hereinabove.

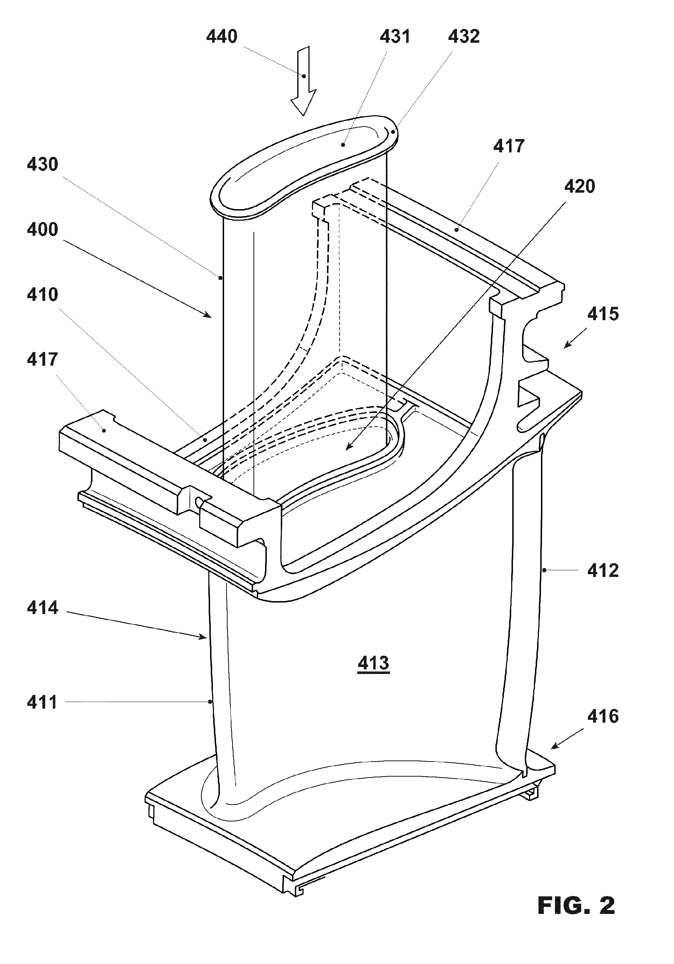

Figure 2 shows a schematic perspective view of an airfoil 400 in accordance with the present disclosure, *e.g*. as described hereinabove.

In the embodiment illustrated in Fig. 2, airfoil 400 comprises an airfoil body 410 and an impingement element 430 that can be inserted into a cavity 420 of airfoil body 410 in an insertion direction symbolized by arrow 440.

The cavity 420 is located in the leading edge portion. In other words, (the entirety of) the cavity is located in a portion of the airfoil body that is proximate to the leading edge and spaced / distanced from the trailing edge. For example, the cavity may be spaced from the trailing edge by at least 20%, 30%, 40% or 50% of the distance from the leading edge to the trailing edge, e.g. as measured along a midline of a cross-section of the airfoil body in a plane orthogonal to the pressure surface. Similarly, the cavity may be spaced from the leading edge by less than 10%, less than 5% or less than 2% of the distance from the leading edge to the trailing edge. The cavity may extend over 40%, 50%, 60% or 70% of the distance from the leading edge to the trailing edge.

In the illustrated embodiment, airfoil 410 comprises a leading edge 411, a trailing edge 412, a pressure surface 413, a suction surface 414, a root 415 and a tip 416. Root 415 comprises mounting elements 417, e.g. for mounting airfoil 410 to a stator 370 of a gas turbine 310. As touched upon above, airfoil 410 moreover comprises a cavity 420, in which cavity 420 impingement element 430 can be positioned / mounted.

In the illustrated embodiment, impingement element 430 has a generally tubular shape including an opening 431, through which opening 431 a pressurized impingement fluid may flow into impingement element 430. Impingement element 430 is also illustrated as comprising a lip portion 432. Lip portion 432 may contribute to a sealing, positioning and/or mounting of impingement element 430 to airfoil body 410. For example, lip portion 432 may be sealingly welded or brazed to airfoil body 410. Lip portion 432 may matingly engage a corresponding element of impingement element 430, thus ensuring that impingement element 430 is properly positioned in airfoil body 410.

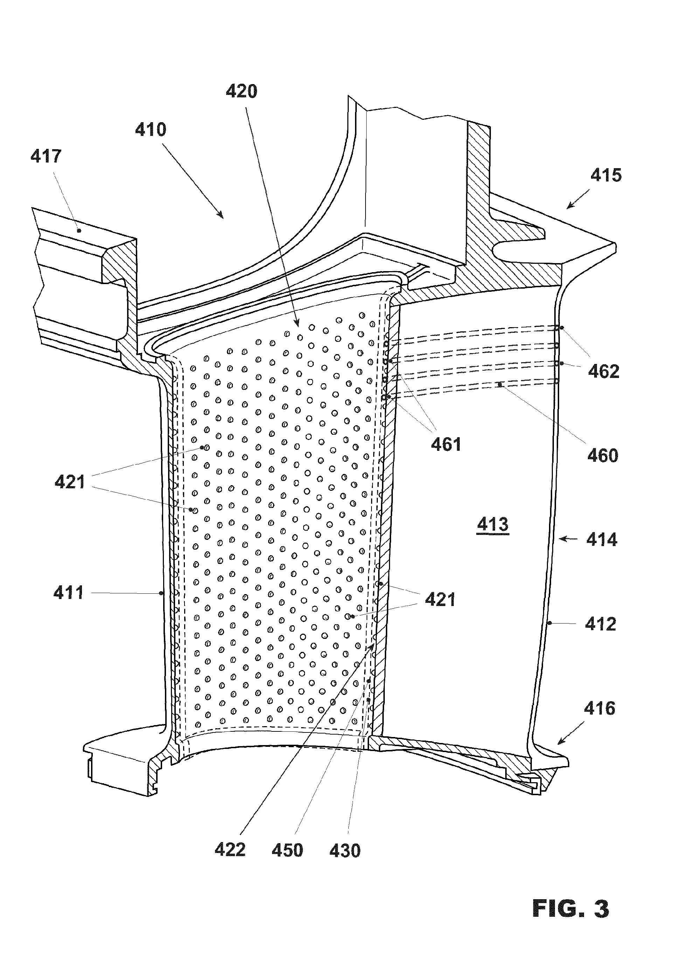

Figure 3 shows a schematic, cross-sectional view of airfoil 400 of Fig. 2, albeit with impingement element 430 being positioned in cavity 420. Specifically, Fig. 3 shows a cross-section through cavity 420 of airfoil 400. For the sake of better representation of various elements of airfoil 400, impingement element 430 is shown as a phantom element in Fig. 3. For the sake of conciseness, features shown in Fig. 3 already described above with regard to Figure 2 will not be redundantly described.

In the embodiment illustrated in Fig. 3, airfoil body 410 comprises a plurality of protuberances 421 on a wall of cavity 420. Impingement element 430 abuts protuberances 421. Protuberances 421 thus ensure that an impingement gap 450 is maintained between impingement element 430 and the wall of cavity 420.

In the embodiment illustrated in Fig. 3, airfoil body 410 comprises a plurality of fluid passages 460, each of which opens at an opening 461 into cavity 420 and at an opening 462 in trailing edge 412 into the ambient atmosphere. For the sake of better representation of the other elements of airfoil body 410, fluid passages 460 are shown as phantom elements in Fig. 3. Moreover, only several fluid passages 460 are shown.

One or more or all of the fluid passages may be of (substantially) constant diameter. Two or more or all of the fluid passages may be of (substantially) equal diameter. Similarly, the diameter of the largest of the fluid passages may be less than 50 percent larger than the diameter of the smallest of the fluid passages. One or more or all of the fluid passages may have a diameter of 5 mm or less, 3 mm or less, or even 1 mm or less. The fluid passages may be formed by drilling through the airfoil body or during a casting of the airfoil body.

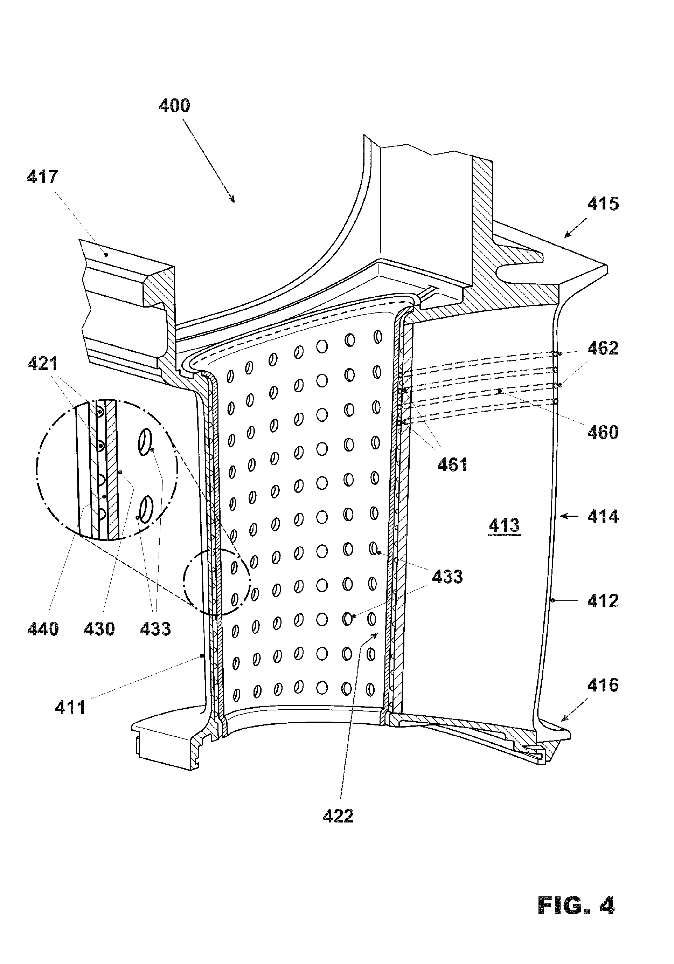

Figure 4 shows a schematic, cross-sectional view of airfoil 400 of Fig. 2, albeit with impingement element 430 being positioned in cavity 420, just as in Fig. 3. Specifically, Fig. 4 shows a cross-section through cavity 420 of airfoil 400 and through a trailing perimeter 422 of cavity 420. For the sake of conciseness, numerous features shown in Fig. 4 already described above with regard to Figures 2 and 3 will not be redundantly described.

In the embodiment illustrated in Fig. 3, impingement element 430 comprises a plurality of impingement openings 433. A pressurized fluid communicated into impingement element 430 flows through impingement openings 433 into impingement gap 450, where it acts to cool airfoil 400, and through fluid passages 460 into the ambient atmosphere. In this respect, tip 416 may be mounted to an element that seals tip 416, i.e. that prevents a flow of the impingement fluid out of impingement element 430 excepting through impingement openings 433.

One or more or all of the impingement openings may belong to the group consisting of rectangular, oval and circular openings. Two or more or all of the impingement openings may be of (substantially) equal area and/or shape. Similarly, the area of the largest of the impingement openings may be less than 50 percent larger than the area of the smallest of the impingement openings. One or more or all of the impingement openings may have an area of 20 mm² or less, 10 mm² or less, or even 5 mm² or less. The impingement openings may be formed by drilling or stamping the openings through a wall of the impingement element.

While various embodiments of the present invention have been disclosed and described in detail herein, it will be apparent to those skilled in the art that various changes may be made to the configuration, operation and form of the invention without departing from the spirit and scope thereof. In particular, it is noted that the respective features of the invention, even those disclosed solely in combination with other features of the invention, may be combined in any configuration excepting those readily apparent to the person skilled in the art as nonsensical. Likewise, use of the singular and plural is solely for the sake of illustration and is not to be interpreted as limiting. In the present disclosure, the verb "comprise" may be understood in the sense of including. Accordingly, the verb "comprise" does not exclude the presence of other elements / actions. In the present disclosure, the verb "may" is used to designate optionality / noncompulsoriness. In other words, something that "may" can, but need not.

### LIST OF REFERENCE SIGNS

- 310: Gas turbine
- 311: Compression stage
- 312: Combustion stage
- 313: Expansion stage
- 370: Stator
- 371: Vane of compression stage 311
- 371a: Vane of expansion stage 313
- 380: Rotor
- 381: Rotational shaft
- 382: Blade of compression stage 311
- 382a: Blade of expansion stage 313
- 400: Airfoil
- 410: Airfoil body
- 411: Leading edge
- 412: Trailing edge
- 413: Pressure surface
- 414: suction surface
- 415: Root
- 416: Tip
- 417: Mounting element
- 420: Cavity
- 421: Protuberance
- 422: Trailing perimeter
- 430: Impingement element
- 431: Opening
- 432: Lip portion
- 433: Impingement openings
- 440: Insertion direction
- 450: Impingement gap
- 460: Fluid passage
- 461: Opening
- 462: Opening

## Claims

1. An airfoil (400) for a gas turbine (310), comprising:
an airfoil body (410) having a leading edge (411), a trailing edge (412) and a cavity (420); and
a tubular impingement element (430) having a plurality of impingement openings (433), wherein
said impingement element is mounted in said cavity,
said leading edge is substantially straight as viewed orthogonally onto a longitudinal axis of said leading edge from at least one direction,
a trailing perimeter (422) of said cavity is substantially straight as viewed orthogonally onto a longitudinal axis of said trailing perimeter from at least one direction, and
said trailing edge is curved relative to a longitudinal axis of said trailing edge.

2. The airfoil of claim 1, comprising:
a plurality of fluid passages (460) extending through said airfoil body from said cavity to an outer surface of said airfoil body.

3. The airfoil of claim 2, wherein:
said airfoil body comprises a leading edge portion proximate to said leading edge and a trailing edge portion proximate to said trailing edge,
said cavity is located in said leading edge portion and said plurality of fluid passages are located in said trailing edge portion.

4. The airfoil of any one of the preceding claims, wherein:
said impingement element is sealingly mounted in said cavity such that fluid communication between an inner volume of said tubular impingement element and a remaining volume of said cavity is limited to fluid communication through said plurality of impingement openings.

5. The airfoil of any one of the preceding claims, wherein:
said impingement element is made of a sheet-like material.

6. The airfoil of any one of the preceding claims, wherein:
a wall of said cavity comprises a plurality of protuberances (421), and
an outer wall of said impingement element abuts said plurality of protuberances.

7. The airfoil of any one of the preceding claims, wherein:
a substantially constant impingement gap (440) between said impingement element and said cavity, said impingement element matingly fits into said cavity.

8. The airfoil of any one of the preceding claims, wherein:
said cavity is formed in one of a tip (416) and a root (415) of said airfoil body.

9. The airfoil of any one of the preceding claims, wherein:
said airfoil body is made of a cast material.

10. The airfoil of any one of the preceding claims, wherein:
said impingement element, said impingement openings and said cavity are configured such that a flow of gas exiting said impingement element through said impingement openings impinges on a wall of said cavity.

11. The airfoil of any one of the preceding claims, wherein:
said trailing perimeter of said cavity is substantially straight as viewed from along a line through said trailing perimeter and orthogonal to a pressure surface of said airfoil body at a radial position of narrowest throat.

12. A gas turbine (310), comprising:
an airfoil (410) in accordance any one of the preceding claims, wherein said trailing edge is shaped such that, for all points along said trailing edge, a local streamline of motive gas through said gas turbine is orthogonal to said trailing edge at an intersection of said local streamline and said trailing edge.

13. A method of modifying a gas turbine (310), said method comprising:
equipping said gas turbine with an airfoil (410) in accordance with any one of claims 1-11.

14. The method of claim 13, wherein said trailing edge of said airfoil is shaped such that, for all points along said trailing edge, a local streamline of motive gas through said gas turbine is orthogonal to said trailing edge at an intersection of said local streamline and said trailing edge.
